# EUROPEAN PATENT APPLICATION

(11) **EP 0 831 439 A1**
(43) Date of publication of application: **25.03.1998**
(21) Application number: 97115852.2
(22) Date of filing: 11.09.1997
(51) Int. Cl.: G08B 3/10

(54) **Selective calling wireless receiver unit**

(30) Priority: 18.09.1996 JP 246620/96
(71) Applicant: NEC CORPORATION, Tokyo (JP)
(72) Inventor: Suzuki, Takahiro, c/o NEC Shizuoka, Ltd., Shizuoka (JP)
(74) Representative: Glawe, Delfs, Moll & Partner

(57) **Abstract**

A selective calling personal receiver has a special buzz tone to alert the user of receiving an urgent reminder to a first urgent message which has not been acknowledged. When a call is received by the present receiver, a master control section checks the call number by referencing against the call numbers stored in its flash memory. If there is a match, the control section retrieves the just-received message attached to the call number, and stores the message in its buffer memory. The just-received message is compared against the stored message, and if the contents of the two messages are identical, then a special buzz tone is sounded so as to be certain that the user realizes that a reminder to an urgent stored message has been received. The just-received message is displayed on the display screen. If the just-received message is a new message which is not identical to the stored message, then the just-received message is displayed on the display screen and the user is notified by following a normal reporting protocol.

## Description

### BACKGROUND OF THE INVENTION

### Field of the Invention

The present invention relates to a selective calling wireless receiver device.

### Description of the Related Art

As is well known, the selective calling (wireless) receiver device compares a selective call number being sent to the device with reference to a list of calling numbers stored in its own memory, and when the two are matched, the message waiting in the selective call signals is retrieved, converted into characters and displayed on the display panel.

The received message may be read immediately and is acknowledged by the user, but at other times, the messages can be left in the memory and not acknowledged. To avoid creating such unsatisfactory situation, various methods are proposed to ensure that the message from a third party will be received by the intended person by alerting the person of the presence of an unread/unacknowledged message.

For example, a Japanese Practical Utility Application, First Publication, H2-43035, discloses a selective calling receiver device which informs the receiver person by sounding an alarm at a pre-designated time when there is an unread/unacknowledged message remaining in the memory section (henceforth referred to as reference technology No. 1). Similarly, a Japanese Practical Utility Application, First Publication, H2-43037, discloses a selective calling receiver device which informs the receiver person by sounding an alarm on the hour when there is an unread/unacknowledged message remaining in the memory section (henceforth referred to as reference technology No. 2).

Also, to prevent an emergency message from being left unattended in the memory section, a Japanese Patent Application, First Publication, H3-45028, discloses a selective calling receiver device having an emergency calling service function. More specifically, the sender wishing to send an emergency message calls an emergency calling number which is different than the regular selective call number. When the emergency message calling number is dialed, this receiver device alerts the user by a buzzing tone, even if the receiver device is in no-buzz mode (henceforth referred to as reference technology No. 3).

However, in the reference technologies Nos. 1 and 2, it is not possible to inform the user of the presence of the unread/unacknowledged message in the memory section until the pre-designated alarm time or the hour time, therefore, there is a problem that the urgent message which should be acknowledged immediately is left unattended for a long period of time.

In the reference technology No. 3, when an urgent call is made through the emergency calling number, the call is always reported by buzzing so that there is a high probability of obtaining acknowledgment by the user. However, this type of receiver device will require an extra emergency calling number in addition to the regular calling number, thus lessening the available number of phone circuits and affecting the transmission efficiency of the receiver device.

Another problem is that, when a message requiring some type of response is received, the response handling protocol in the existing selective calling receiver devices is quite inadequate. More specifically, the sender who has sent out such an urgent message, is generally inclined to re-transmit the message when the intended receiver has not responded to the first message. Such a high priority message should be immediately acknowledged by the user, but the existing devices are not provided with suitable means to carry out such a task, and the user often had difficulty in becoming aware that a duplicate urgent message have been received by his receiver device.

### SUMMARY OF THE INVENTION

It is an object of the present invention to provide a selective calling wireless receiver device which ensures that a reception of a re-transmitted message having a high degree of urgency will be reported to the receiver person (user).

The object has been achieved in a selective calling wireless receiver device comprising: a memory section for storing call numbers: a reporting device for reporting a call reception; and a control device for retrieving a message and alerting a receiver person;
wherein when a selective call number in selective call signals received agrees with a call number stored in the memory section, the control device retrieves a just-received message from the selective call signals, and alerts the receiver person by means of the reporting device.

A second aspect of the receiver device is that the device is provided with a message memory section for storing received messages. Accordingly, an incoming message can be compared with a number of previous messages which have been received by the receiver device.

A third aspect of the receiver device including the second feature is that the control device stores a just-received message attached to the selective call signals in the message memory section, and when a message content in the selective call signals is identical to a message content in an unacknowledged message stored in the message memory section, the control device so alerts the receiver person by means of the reporting device using a distinctly recognizable reporting protocol. Accordingly, the new message can be identified as a re-transmission of one of the previous messages stored in the message memory section.

A fourth aspect of the receiver device including the third feature is that the reporting device utilizes tone and imaging for reporting. Accordingly, the device is versatile and able to notify the user by sound as well as by display.

A fifth aspect of the receiver device including the fourth feature is that the message memory section comprises erasable semiconductor memory means. Accordingly, successive arrivals of new messages can be accommodated without increasing the memory capacity.

A sixth aspect of the receiver device including the third feature is that the control device alerts the receiver person using the reporting device in a distinctly recognizable reporting protocol when a message content in the selective call signals is identical to a message content in a latest unacknowledged message stored in the message memory section. Accordingly, the user is made aware that the just-received message is a re-transmission of an urgent message which has not been acknowledged.

A seventh aspect of the receiver device including the third feature is that the control device performs the distinctly recognizable reporting protocol by using a buzz tone to differentiate from a normal reporting protocol. Accordingly, the device makes certain that the user becomes aware of the presence of a reminder message.

An eighth aspect of the receiver device including the sixth feature is that wherein the control device performs the distinctly recognizable reporting protocol by using a buzz tone to differentiate from a normal reporting protocol.
Accordingly, the user is notified audibly that a reminder message has been received.

A ninth aspect of the receiver device including the third feature is that the reporting device comprises a vibrator device for reporting. Accordingly, the user can be notified physically that an urgent reminder has been received.

A tenth aspect of the receiver device including the sixth feature is that the reporting device also comprises a vibrator device for reporting. Accordingly, the device is also applicable to the latest message stored in the message memory section.

A eleventh aspect of the receiver device including the ninth feature is that the control device controls the vibrator device. Accordingly, alerting functions are controlled by a centralized device.

A twelfth aspect of the receiver device including the tenth feature is that the control device controls the vibrator device. Accordingly, the device is applicable to the latest message stored in the message memory section.

A thirteenth aspect of the receiver device including the seventh feature is that the control device is provided with a plurality of different buzz tone patterns so as to enable reporting a plurality of messages of different purposes. Accordingly, the user can be made aware of different kinds of messages which may be sent.

A fourteenth aspect of the receiver device including the eighth feature is that the control device is provided with a plurality of different buzz tone patterns so as to enable reporting a plurality of messages of different purposes.

The present invention thus demonstrated that the selective calling receiver device of the present invention offers superior performance to the conventional selective calling receiver devices, because it has an ability to alert the user by a special buzzing protocol, different from the normal reporting protocol, to report the arrival of a new message whose content is the same as the unread/unacknowledged message stored in the memory so that the user will know precisely that this message is a reminder or re-transmission without looking into the display section. Further, another advantage of the receiver device is that there is no need to provide a separate call number for emergency use.

### BRIEF DESCRIPTION OF THE DRAWINGS

Figure 1 is a block diagram of the circuit configuration of an embodiment of the selective calling receiver device of the present invention.

Figure 2 is a flowchart showing the operational steps of the embodiment device.

### DESCRIPTION OF THE PREFERRED EMBODIMENTS

A preferred embodiment will be presented with reference to the drawings.

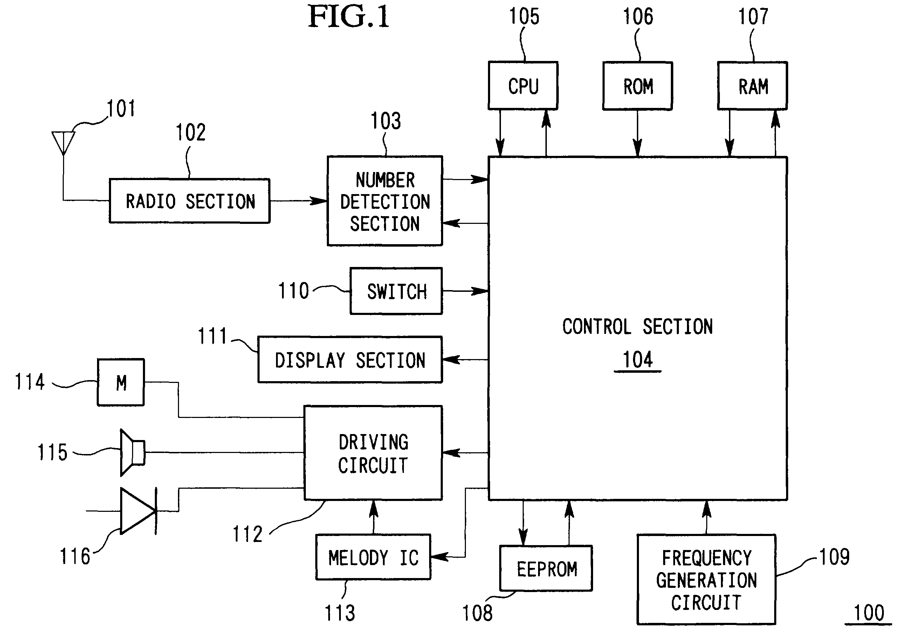

Figure 1 is a block diagram of the arrangement of the components of a selective calling (wireless, personal) receiver device 100 of the present invention. On the sender side, the radio carrier wave is modulated by the selective call number and attached message signals, and the resulting selective call signals are transmitted to the receiver device. The selective call signals are received by an antennae 101 of the selective calling receiver device (shortened to receiver device henceforth) 100, and after being amplified in the radio section 102, they are demodulated into the baseband signals.

In the calling number detection section 103, error correction and word clipping are performed according to a pre-selected method, such as point of communication scriptor activated graphics (POC SAG), to access the selective call number from the selective call signals, and the just-received calling number is referenced against the stored calling numbers in the electrically erasable programmable read only memory (EEPROM) 108. As a result of this comparison process, if the two numbers match, the message following the just-received calling number in the selective call signals is retrieved, and after applying corrections to errors, it is stored in random access memory (RAM) 107 by means of the control section 104. Switch 110 is connected to the control section 104.

The central processor unit (CPU) 105 processes the message according to the program stored in ROM 106, and operates a vibrator 114, a speaker 115 and a light emitting diode (LED) 116 by activating the driving circuit 112 and the melody integrated circuit (IC) 113. The frequency generation circuit 109 outputs clock signals necessary to process the selective calling receiver device 100.

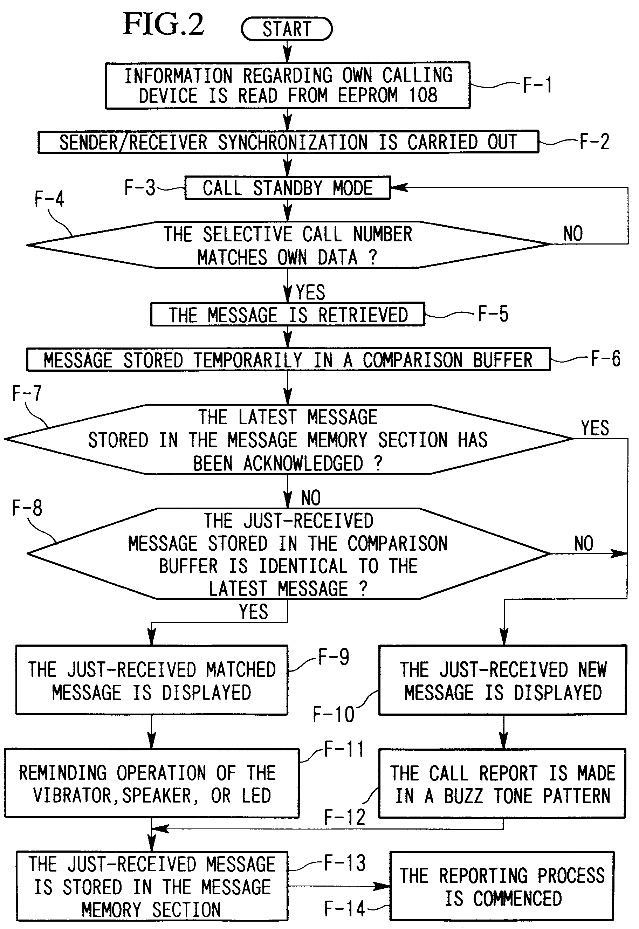

Figure 2 is a flowchart for the message processing steps executed by the CPU 105. The operation of the embodiment device will be presented with reference to this flowchart.

First, when the power on the selective calling receiver device 100 is turned on, information regarding own calling device is read from EEPROM 108 and stored in RAM 108 (step F-1). Next, sender/receiver synchronization is carried out by receiving preamble signals and synchronizing code (SC) signals (step F-2). Next, basic operations for signal reception are performed, and then the device remains in a call standby mode for receiving information regarding its own calling data (step F-3).

If, selective call signals are received during this call standby mode (step F-3), it proceeds to the discrimination operation (step F-4), and examines whether the selective call number in the selective call signals matches the own data read into the selective call numbers list in step F-1. If the numbers match, the message attached to the selective call signals is retrieved (step F-5). If the numbers do not match, it returns to the call standby mode (step F-3).

If the message is retrieved (step F-5), it is stored temporarily in a comparison buffer in RAM 107 (step F-6) provided separately in the message memory section.

Next, proceeding to step F-7, it examines whether or not the latest message stored in the message memory section of RAM 107 has been acknowledged. If the latest message has not been acknowledged, it examines whether or not the just-received message stored in the comparison buffer is identical to the latest message (step F-8).

If, as a result of this examination process, if the two messages are found to be identical, the just-received message stored in the comparison buffer in RAM 107 is displayed (as the just-received matched message) on the message display section 111 (step F-9). To ensure that the user is made aware that the displayed matched message is a reminder from the sender, a driving circuit 112 is activated so as to operate the vibrator 114, speaker 115 or LED 116 (step F-11). In this operation, when using the speaker 115 to alert the user, the call report is made in a buzz tone pattern (step F-12) to differentiate from the normal reporting pattern so as to precisely inform the person that the message is urgent. Then, the just-received message is read out from the comparison buffer in RAM 107, and is stored in the message memory section (step F-13), and the reporting process is commenced (step F-14) to alert the user.

On the other hand, in step F-7, if it decides that the latest message in RAM 7 has been acknowledged, or in step F-8, if it decides that, although the stored message has not been acknowledged but the content of the stored message and the content of the comparison buffer are not identical, the content of the comparison buffer (just-received new message) is displayed in the display section 111 (step F-10), and the process of reporting with the normal buzz tone is commenced (step F-12).

The embodiment above presented a case of alerting the person when a new message is received whose content is the same as the stored and unacknowledged message, however, it is not necessary to be limited by this approach. For example, it is possible to allow accumulation of a specific number of messages (of the same content), and to alert the person when a reminder message is received, whose content is the same as those accumulated messages.

## Claims

1. A selective calling wireless receiver device comprising:
a memory section for storing call numbers:
a reporting device for reporting a call reception; and
a control device for retrieving a message and alerting a receiver person;
wherein when a selective call number in selective call signals, received by said selective calling receiver device, agrees with a call number stored in said memory section, said control device retrieves a just-received message from the selective call signals, and alerts said receiver person by means of said reporting device.

2. A selective calling wireless receiver device according to claim 1, wherein said device is provided with a message memory section for storing received messages.

3. A selective calling wireless receiver device according to claim 1, wherein said control device stores a just-received message attached to said selective call signals in said message memory section, and when a message content in the selective call signals is identical to a message content in an unacknowledged message stored in said message memory section, said control device so alerts said receiver person by means of said reporting device using a distinctly recognizable reporting protocol.

4. A selective calling wireless receiver device according to claim 3, wherein said reporting device utilizes tone and imaging for reporting.

5. A selective calling wireless receiver device according to claim 4, wherein said message memory section comprises erasable semiconductor memory means.

6. A selective calling wireless receiver device according to claim 3, wherein said control device alerts said receiver person using said reporting device in a distinctly recognizable reporting protocol when a message content in said selective call signals is identical to a message content in a latest unacknowledged message stored in said message memory section.

7. A selective calling wireless receiver device according to claim 3, wherein said control device performs said distinctly recognizable reporting protocol by using a buzz tone to differentiate from a normal reporting protocol.

8. A selective calling wireless receiver device according to claim 6, wherein said control device performs said distinctly recognizable reporting protocol by using a buzz tone to differentiate from a normal reporting protocol.

9. A selective calling wireless receiver device according to claim 3, wherein said reporting device comprises a vibrator device for reporting.

10. A selective calling wireless receiver device according to claim 6, wherein said reporting device comprises a vibrator device for reporting.

11. A selective calling wireless receiver device according to claim 9, wherein said control device controls said vibrator device.

12. A selective calling wireless receiver device according to claim 10, wherein said control device controls said vibrator device.

13. A selective calling wireless receiver device according to claim 7, wherein said control device is provided with a plurality of different buzz tone patterns so as to enable reporting a plurality of messages of different purposes.

14. A selective calling wireless receiver device according to claim 8, wherein said control device is provided with a plurality of different buzz tone patterns so as to enable reporting a plurality of messages of different purposes.
